# FASCICULE DE BREVET EUROPEEN

(11) **EP 1 578 064 B1**
(45) Date de publication et mention de la délivrance du brevet: **16.10.2013**
(21) Numéro de dépôt: 05290583.3
(22) Date de dépôt: 16.03.2005
(51) Int. Cl.: H04L 12/28, H04L 29/06

(54) **Procédé d'accès à un service par l'intermédiaire d'un terminal relié à un réseau de communication**
Verfahren zum Zugriff auf einen Dienst durch ein an ein Kommunikationsnetz angeschlossenes Endgerät
Method to access a service via a terminal connected to a communication network

(30) Priorité: 18.03.2004 FR 0402813
(43) Date de publication de la demande: 21.09.2005
(73) Titulaire: Orange, 75015 Paris (FR)
(72) Inventeur: Brun, Alain, 38450 Vif (FR); Berge, Jean-Michel, 38330 Siant Nazaire les Eymes (FR)
(74) Mandataire: Cabinet Plasseraud

(56) Documents cités:
- WO-A-00/49585
- WO-A-98/57474
- WO-A-2004/068819
- US-A1- 2003 055 735
- KHACHTCHANSKI V I ET AL: "Universal SIM toolkit-based client for mobile authorization system" INTERNATIONAL CONFERENCE ON INFORMATION INTEGRATION AND WEB-BASED APPLICATIONS AND SERVICES, XX, XX, 10 septembre 2001 (2001-09-10), pages 337-344, XP002282125
- KYLANPAA M ET AL: "Nomadic access to information services by a GSM phone" COMPUTERS AND GRAPHICS, PERGAMON PRESS LTD. OXFORD, GB, vol. 20, no. 5, septembre 1996 (1996-09), pages 651-658, XP004015416 ISSN: 0097-8493

## Description

La présente invention concerne un procédé d'accès à un service par l'intermédiaire d'un terminal relié à un réseau de communication. Elle concerne plus particulièrement un tel procédé adapté pour accéder, au moyen d'un terminal filaire, à un service qui nécessite des données d'accès disponibles dans un terminal de communication sans fil.

De nombreux services ont été développés récemment, qui sont accessibles au moyen d'un terminal de communication sans fil relié à un réseau de communication. De tels services sont, par exemple, une consultation de base de données ou d'un catalogue, une fourniture d'informations, notamment touristiques, un achat ou une commande à distance. Ces services sont délivrés à partir de serveurs reliés au réseau de communication. Ils sont accessibles en établissant une communication entre un terminal sans fil et le serveur.

L'accès au service est en général contrôlé, notamment dans le cas d'un service payant. Le contrôle a pour but de vérifier qu'un paiement a effectivement été effectué ou pourra être effectué ultérieurement, correspondant au service délivré.

Aujourd'hui, un tel contrôle nécessite que le client d'un service délivré à distance via un réseau de communication utilise un terminal de communication sans fil. En effet, le contrôle d'accès au service est basé sur des données dont seuls disposent les terminaux de communication sans fil. De telles données sont, notamment, des paramètres d'identification de l'abonné au réseau de communication, des paramètres d'authentification de l'utilisateur du terminal, par exemple sous forme d'un code, ou des paramètres de localisation du terminal sans fil. Ces données sont stockées dans une mini-carte électronique comprise dans le terminal sans fil, appelée module d'identification d'abonné, ou carte SIM (pour «Subscriber Identification Module», en anglais).

Du fait qu'un terminal de communication filaire n'est généralement pas équipé d'un tel module SIM, ou d'un dispositif ayant une fonction équivalente, un utilisateur d'un réseau de communication ne peut avoir accès, à partir d'un terminal filaire, à un service qui nécessite des données qui ne sont disponibles qu'au sein d'un terminal de communication sans fil.

Le document US 2003/0055735 divulgue un procédé de paiement à distance qui est mis en oeuvre à partir d'un distributeur relié localement à un terminal mobile. Le procédé comprend un test d'authentification du client, qui est réalisé à distance par un serveur de paiement.

Un but de la présente invention est de permettre l'accès à un service délivré à distance au moyen d'un terminal filaire relié à un réseau de communication, pour un service qui nécessite des données d'accès disponibles dans un terminal de communication sans fil.

L'invention propose un procédé d'accès à un service par l'intermédiaire d'un premier terminal de communication relié à un réseau de communication, ledit premier terminal étant par ailleurs relié à un second terminal de communication sans fil par une liaison de transmission supplémentaire distincte dudit réseau de communication. Le procédé comprend les étapes suivantes :
- établissement d'une session de communication entre les premier et
   second terminaux par ladite liaison de transmission supplémentaire ;
- transmission de données d'accès au premier terminal à partir du second
   terminal par ladite liaison de transmission supplémentaire ;
- mise à disposition du service au premier terminal par l'intermédiaire dudit réseau de communication à condition que les données d'accès transmises comprennent des paramètres d'identification d'un abonné au réseau de communication associé au second terminal, des paramètres d'authentification d'un utilisateur du second terminal et une autorisation d'accès.

Selon l'invention, les données nécessaires à la délivrance du service sont transmises au premier terminal lors d'une session de communication établie entre les premier et second terminaux. Cette session de communication utilise la liaison de transmission supplémentaire qui relie les premier et second terminaux, mais n'emprunte pas le réseau de communication. A partir des données d'accès ainsi reçues par le premier terminal fixe, le service peut être délivré à l'utilisateur du premier terminal.

Pour que le service soit mis à la disposition d'un client, il est nécessaire que les données d'accès transmises permettent, notamment, d'identifier ce client comme un abonné autorisé à utiliser le réseau de communication par l'intermédiaire du second terminal.

Un avantage d'un procédé d'accès à un service selon l'invention réside dans l'utilisation d'un unique réseau de communication auquel est relié le serveur. L'offre du service est alors simplifiée et moins onéreuse pour le fournisseur de celui-ci.

Un autre avantage résulte du fait qu'une unique session de communication par le réseau de communication est suffisante pour permettre l'accès au service. En effet, les données nécessaires pour l'accès au service sont transmises au premier terminal par la liaison de transmission supplémentaire, qui est externe au réseau de communication. Ainsi, la transmission de ces données n'est pas perturbée par d'éventuelles congestions ou dysfonctionnements du réseau de communication. Une meilleure disponibilité du service en résulte.

En outré, la transmission des données d'accès au service entre les premier et second terminaux ne provoque aucun encombrement du réseau de communication. L'invention permet donc une meilleure exploitation du réseau de communication. En particulier, à capacité égale du réseau, un plus grand nombre d'accès à des services peuvent être fournis simultanément à des utilisateurs différents du réseau.

Un autre avantage encore d'un procédé selon l'invention réside dans la simplicité des actions que doit accomplir un client du service. En effet, grâce à l'utilisation d'une session de communication entre les premier et second terminaux, l'utilisateur n'a pas à saisir manuellement les données nécessaires à l'accès au service. Tout risque d'erreur de saisie est alors évité. Les données d'accès ainsi transmises peuvent être complexes et nombreuses, sans qu'il en résulte d'inconvénient pour le client.

Selon le mode de mise en oeuvre préféré de l'invention, une partie au moins des données d'accès transmises au premier terminal à partir du second terminal est stockée dans un module d'identification d'abonné compris dans le second terminal. Les données transmises sont ainsi disponibles au sein du second terminal, sans qu'il soit nécessaire d'établir une session de communication additionnelle par le réseau de communication.

Des codes de programmation peuvent en outre stockés dans le module d'identification d'abonné, pour commander la transmission d'une partie au moins des données d'accès au premier terminal à partir du second terminal. Eventuellement lesdits codes sont adaptés pour commander en outre une présentation d'éléments d'information résultant des données d'accès, ladite présentation étant effectuée au moyen du premier terminal.

L'invention concerne aussi un terminal de communication permettant d'accéder à un service selon un procédé tel que décrit précédemment. Un tel terminal comprend des moyens de connexion à un réseau de communication et des moyens de communication par une liaison de transmission supplémentaire distincte dudit réseau de communication. Il comprend en outre des moyens de mise à disposition d'un service délivré par l'intermédiaire du réseau de communication, agencés pour délivrer le service à partir de données d'accès qui comprennent des paramètres d'identification d'un abonné au réseau de communication associé à un second terminal, des paramètres d'authentification d'un utilisateur du second terminal et une autorisation d'accès, ces données étant reçues par ladite liaison de transmission supplémentaire.

En particulier, un tel terminal peut être un terminal filaire, c'est à dire relié au réseau de communication par un câble de connexion. Ce peut être notamment un terminal fixe, tel qu'une unité informatique de bureau par exemple.

L'invention concerne encore un terminal de communication sans fil par un réseau de communication, adapté pour mettre en oeuvre un procédé selon l'invention. Un tel terminal sans fil comprend des moyens de communication par une liaison de transmission supplémentaire distincte du réseau de communication et des moyens de lecture de données d'accès dans un module d'identification d'abonné compris dans ledit terminal de communication sans fil. Il comprend en outre des moyens de transmission d'une partie au moins des données d'accès lues par ladite liaison de transmission supplémentaire, cette partie des données d'accès comprenant des paramètres d'identification d'un abonné au réseau de communication associé au terminal, des paramètres d'authentification d'un utilisateur du terminal et une autorisation d'accès, lesdits moyens étant agencés pour être commandés lors d'une exécution d'un programme stocké dans le module d'identification d'abonné.

L'invention concerne enfin un module d'identification d'abonné pour équipement de communication sans fil, comprenant un support d'enregistrement dans lequel sont stockées des données d'accès et des codes de programmation. Les codes de programmation sont adaptés pour commander une transmission d'une partie au moins des données d'accès par ledit équipement de communication sans fil au moyen d'une liaison de transmission supplémentaire dudit équipement de communication sans fil, ladite partie des données d'accès comprenant des paramètres d'identification d'un abonné au réseau de communication associé à un terminal incorporant l'équipement de communication sans fil et le module, des paramètres d'authentification d'un utilisateur du terminal et une autorisation d'accès. Un tel module d'identification d'abonné permet une mise en oeuvre particulièrement simple et efficace du procédé de l'invention.

Les codes de programmation stockés dans le module d'identification d'abonné peuvent être adaptés pour commander en outre une présentation d'éléments d'information résultant des données d'accès transmises, cette présentation étant effectuée au moyen d'un autre terminal relié à l'équipement de communication sans fil par ladite liaison de transmission supplémentaire.

D'autres particularités et avantages de la présente invention apparaîtront dans la description ci-après d'un exemple de mise en oeuvre non limitatif, en référence aux dessins annexés, dans lesquels :
- la figure 1 représente des unités de communication adaptées pour mettre en oeuvre un procédé d'accès à un service conformément à la présente invention ;
- la figure 2 illustre une structure logicielle d'un module d'identification d'abonné utilisé dans l'une des unités de communication de la figure 1 ; et
- les figures 3a et 3b, destinées à être associées, forment un diagramme des différentes étapes d'accès à un service selon un procédé conforme à la présente invention.

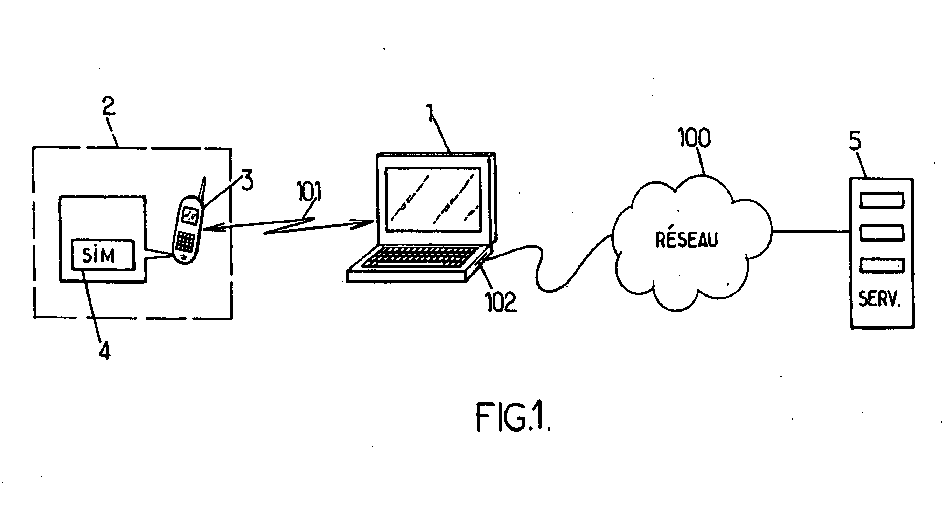

Conformément à la figure 1, un terminal de communication filaire 1, désigné dans la suite par terminal fixe 1, et un serveur 5 sont reliés à un réseau de communication 100, par exemple de type GSM. Le serveur 5 est adapté pour délivrer des services à distance par l'intermédiaire du réseau 100. Les services proposés par le serveur 5 peuvent être de types variés, tels que la réservation de places de spectacles, de transports, la consultation de guides ou de catalogues, l'accès à des informations touristiques, etc.

Le terminal fixe 1 peut être une unité informatique, un terminal de type Minitel®, etc. Il est relié au réseau 100 par un port d'entrée-sortie dédié 102 de type filaire. Le terminal 1 est en outre équipé de moyens de transmission procurant une liaison 101 avec un terminal de communication sans fil 2. La liaison 101, dite liaison de transmission supplémentaire, est indépendante du réseau de communication 100. La liaison 101 peut être une liaison de transmission locale, dont la portée est limitée à quelques dizaines de métres. Elle peut être de type radio ou infrarouge. Elle peut être notamment du type Bluetooth®, connu de l'Homme du métier.

Le terminal sans fil 2 peut être d'un type usuel, qui comprend un équipement de communication sans fil 3 et un module d'identification d'abonné, de type carte SIM, référencé 4 sur la figure 1. L'équipement 3 peut être un téléphone mobile. Pour la mise en oeuvre de l'invention, l'équipement 3 est équipé de moyens de communication par la liaison de transmission 101. Ces moyens de communication par la liaison 101, au sein de l'équipement 3, sont distincts des moyens de communication par le réseau 100 dont dispose l'équipement 3.

La carte 4 est reliée à l'équipement 3 d'une façon habituelle, par exemple conformément aux recommandations ETSI de GSM.

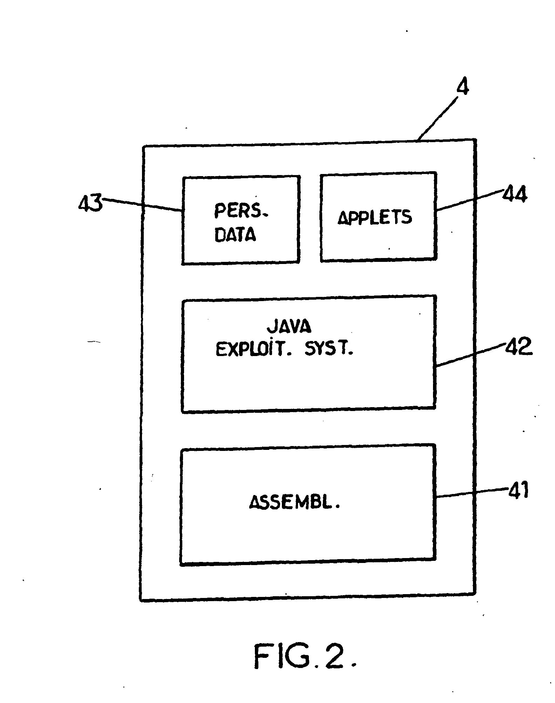

La figure 2 illustre la structure logicielle de la carte SIM 4. Elle comprend un noyau de programmation en langage assembleur, référencé 41, inscrit dans la carte 4 lors de sa fabrication. Un système d'exploitation 42 constitue une interface entre le noyau de programmation 41 et l'équipement 3. Actuellement, le système d'exploitation 42 utilisé est JAVA. De façon connue, au sein de la carte 4, le système JAVA met à disposition de l'opérateur du réseau de communication plusieurs mémoires, accessibles par le répertoire DFgsm. Des premières mémoires de la carte 4 sont destinées au stockage de diverses données, telles que des données d'identification d'un abonné au réseau de communication 100, des données d'authentification d'un utilisateur du terminal 2, etc. De telles données sont appelées données de personnalisation de la carte 4 et sont indiquées par la référence 43 sur la figure 2. D'autres données peuvent être stockées de la même manière dans la carte 4, telles qu'une table de services autorisés, une liste de réseaux préférentiels, la dernière zone identifiée de localisation du terminal sans fil 2, etc.

Des secondes mémoires sont en outre à la disposition de l'opérateur du réseau au sein de la carte 4, qui sont accessibles par le sous-répertoire DFgsm/DFtoolkit. Ces secondes mémoires sont destinées au stockage de mini-applications, appelées applets et référencées 44 sur la figure 2. Une applet utilise des outils spécifiés dans la partie «SIM Application Toolkit» des recommandations ETSI 11.14 de GSM. Elle comprend des commandes d'actions que la carte 4 envoie à l'équipement 3. Les actions sont accomplies par l'équipement 3 lorsque l'applet est exécutée. Une applet peut aussi commander un dialogue entre la carte 4 et l'équipement 3 (ETSI 3.40 et 3.48 de GSM). De façon connue, l'applet peut être stockée initialement dans la carte 4, lors de la fabrication de celle-ci, ou être téléchargée lors d'une session de communication établie via le réseau 100 entre le terminal 2 et un serveur de l'opérateur du réseau 100.

Des exemples d'actions exécutées par l'équipement 3 qui peuvent être programmées sous forme d'applets sont l'affichage d'informations ou de menus sur un écran de l'équipement 3, ou encore une transmission de données par l'équipement 3 via la liaison de transmission 101. Dans ce dernier cas, l'applet comprend notamment les instructions nécessaires pour disposer les données d'accès dans des champs de trames adaptées à la nature de la liaison de transmission 101. Le terminal fixe 1 doit alors disposer des éléments du système JAVA nécessaires pour décoder les données ainsi transmises.

Une mise en oeuvre d'un procédé selon l'invention est maintenant décrite. Un service est proposé au moyen du serveur 5. L'accès au service est autorisé en fonction de données d'identification et/ou d'authentification du client, qui sont stockées dans la carte SIM du terminal sans fil 2.

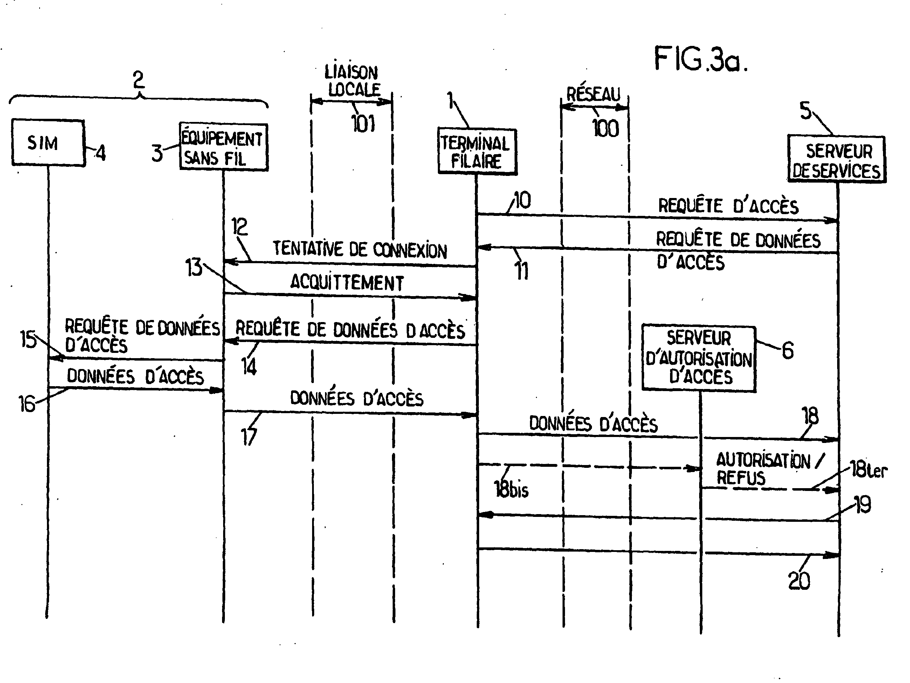

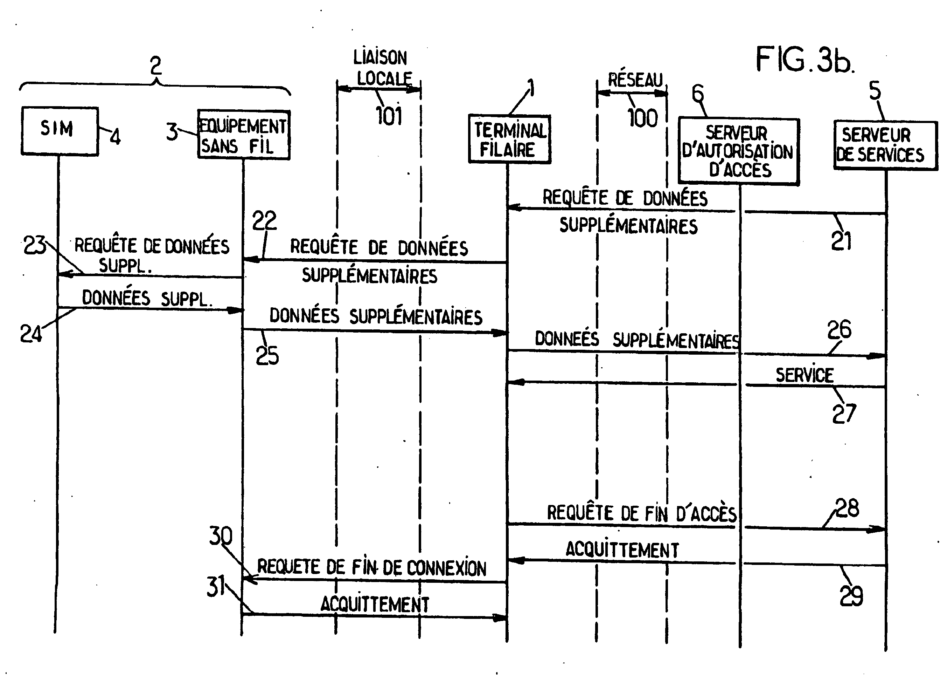

Conformément à la figure 3a, le client initie une session de communication entre le terminal fixe 1 et le serveur 5, via le réseau 100. Une requête d'accès 10 est transmise à partir du terminal fixe 1 au serveur 5. Afin de permettre un contrôle de l'accès au service, le serveur 5 transmet en réponse au terminal fixe 1 une requête de données d'accès 11. Les données d'accès comprennent des paramètres d'identification d'un abonné au réseau de communication associé au terminal sans fil 2, des paramètres d'authentification de l'utilisateur du terminal sans fil 2, une autorisation d'accès au service demandé et, éventuellement, une liste de services, par exemple une liste de services auxquels l'accès est autorisé. Elles peuvent aussi comprendre des paramètres de localisation du terminal sans fil 2, notamment lorsque l'offre du service dépend de l'endroit où se trouve le client. Ceci peut être le cas, notamment, pour un service de nature touristique attaché à un site déterminé. De telles données d'accès ne sont pas disponibles au sein du terminal fixe 1, lorsque celui-ci est de l'un des modèles commercialisés actuellement.

Le terminal fixe 1 initie alors une session de communication avec l'équipement sans fil 3 par la liaison 101. Une tentative de connexion 12 avec l'équipement 3 est effectuée par le terminal fixe 1, via la liaison 101. En cas de succès, l'équipement 3 renvoie au terminal fixe 1 un message d'acquittement 13. Une session de communication est alors établie par la liaison 101 entre le terminal 1 et l'équipement sans fil 3.

Alternativement, lorsque la liaison 101 est de type Bluetooth®, la session de communication entre les terminaux 1 et 2 peut être ouverte avant que la session de communication entre le terminal fixe 1 et le serveur 5 soit ouverte.

Le terminal fixe 1 émet une requête 14 à destination du terminal sans fil 2, via la liaison 101. La requête 14 relaie la requête de données d'accès 11 jusqu'à l'équipement 3. L'émission de la requête 14 par le terminal fixe 1 peut être commandée par une applet hébergée dans le terminal fixe 1 et activée à la réception de la requête 11.

A réception de la requête 14, l'équipement 3 émet à son tour une requête 15 à destination de la carte 4, en vue d'obtenir les données d'accès. De façon connue, le mode de délivrance des données d'accès dépend du type de ces données. Certaines données sont directement lues dans la carte 4 et transmises à l'équipement sans fil 3 (étape 16 sur la figure 1). Des paramètres d'identification de l'abonné associé au terminal sans fil 2 peuvent être ainsi transmis, une liste de services pour lesquels l'accès est autorisé, et/ou des paramètres de localisation du terminal 2. De telles données ont été préalablement enregistrées dans la carte 4.

Lorsque la donnée d'accès requise est une autorisation d'accès un service, l'équipement 3, à réception de la requête 14, peut demander au client d'entrer un code d'authentification. Pour cela, une invitation appropriée est produite par affichage sur un écran ou par adressage d'un message audio préenregistré. L'invitation peut être produite au moyen de l'équipement 3, mais elle est préférentiellement produite au moyen du terminal fixe 1, près duquel se trouve le client. Le client saisit alors le code d'authentification au niveau du terminal 1 ou de l'équipement 3 indiqué dans l'invitation. Le code saisi est alors comparé à une référence stockée dans la carte 4. Avantageusement, le test d'authentification est effectué au sein du terminal sans fil 2. Lorsque le code est saisi au niveau du terminal fixe 1, des messages sont échangés entre le terminal fixe 1 et l'équipement 3 pour combiner les actions exécutées dans les deux terminaux 1 et 2. Une première autorisation d'accès au service ou, à l'inverse, un refus d'accès au service est alors produit dans le terminal sans fil 2 comme résultat du test d'authentification du client.

La/les données d'accès requises, comprenant éventuellement la première autorisation d'accès précédente, sont ensuite transmises par l'équipement 3 au terminal fixe 1, via la liaison 101 (étape 17). Cette transmission peut être commandée par l'exécution d'une applet au sein de la carte 4, déclenchée par la requête 15. Eventuellement, l'applet peut aussi commander l'affichage, sur l'écran du terminal fixe 1, de divers éléments d'information résultant des données transmises par la carte 4. De tels éléments peuvent comprendre une liste de services auxquels l'accès est autorisé, par exemple.

Les données d'accès sont ensuite transmises par le terminal fixe 1 au serveur 5, via le réseau 100 (étape 18). Une seconde autorisation d'accès au service peut alors être délivrée par le serveur 5. Cette seconde autorisation peut résulter d'une comparaison entre les données d'identification reçues et une liste de données d'identification de clients pour lesquels l'accès est autorisé. Elle peut aussi résulter de la présence du service demandé dans une liste de services autorisés établie pour les données d'identification reçues. Enfin, un test supplémentaire d'authentification du client peut être effectué à ce niveau, correspondant à un programme exécuté par le serveur 5.

Selon une variante du procédé, les données d'accès sont transmises par le terminal fixe 1 à un serveur d'autorisation d'accès 6 (étape 18bis). Le serveur 6 autorise ou refuse l'accès au service demandé et transmet un message approprié au serveur 5 (étape 18ter). En cas de refus d'accès, le serveur 5 peut réémettre une requête de données d'accès identique à la requête 11, ou interrompre la session de communication avec le terminal fixe 1.

Dans le cas d'un accès autorisé au service, la session de communication entre le serveur 5 et le terminal fixe 1 est poursuivie conformément au procédé de fourniture du service (étapes 19 et 20).

Eventuellement, la fourniture du service peut requérir des données supplémentaires stockées dans la carte 4. Une requête de données supplémentaires 21 est alors transmise par le serveur 5 au terminal fixe 1. La requête 21 peut être d'un principe analogue à celui de la requête 11. Elle est ensuite relayée à l'équipement 3 (étape 22) et à la carte 4 (étape 23). Les données supplémentaires sont produites par la carte 4 et transmises en réponse jusqu'au serveur 5 d'une façon identique à celle décrite plus haut pour les données d'accès (étapes 24-26).

Le service est alors délivré au client au niveau du terminal fixe 1 (étape 27). Le paiement du service peut être effectué de l'une des façons connues, qui n'est pas reprise ici.

Une fois le service délivré, la session de communication entre le terminal fixe 1 et le serveur 5, via le réseau 100, peut être close. Pour cela, une requête 28 de fin d'accès au service est transmise par le terminal fixe 1 au serveur 5. Celui acquitte la requête de fin d'accès (étape 29) et la session de communication via le réseau 100 est terminée.

Eventuellement, la session de communication entre le terminal fixe 1 et l'équipement 3, via la liaison 101, peut aussi être close. Une requête de fin de connexion 30 et un acquittement 31 peuvent être mis en oeuvre à cet effet, selon le mode de communication utilisé sur la liaison 101.

Il est entendu que de nombreuses variantes peuvent être introduites dans la mise en oeuvre de l'invention décrite en détail ci-dessus. Ces variantes sont comprises dans le cadre de l'invention dans la mesure où des données d'accès à un service sont transmises par un terminal de communication sans fil à un autre terminal, afin de permettre un accès au service à partir de cet autre terminal.

## Revendications

1. Procédé d'accès à un service par un utilisateur, par l'intermédiaire d'un premier terminal de communication (1) relié à un réseau de communication (100), ledit premier terminal étant par ailleurs relié à second terminal de communication sans fil (2) par une liaison de transmission supplémentaire (101) distincte dudit réseau de communication, ledit procédé comprenant tes étapes suivantes :
- établissement d'une session de communication (12. 13) entre les premier (1) et second (2) terminaux par ladite liaison de transmission supplémentaire (101) :
- réalisation d'un premier test d'authentification de l'utilisateur produisant une première, autorisation d'accès au service ou un refus d'accès comme résultat dudit premier test d'authentification ;
- transmission de données d'accès (17) au premier terminal (1) à partir du second terminal (2) par ladite liaison de transmission supplémentaire; et
- mise à disposition du service (27) au premier terminal (1) par l'intermédiaire dudit réseau de communication (100) à condition que les données d'accès transmises comprennent des paramètres d'identification d'un abonné au réseau de communication associé au second terminal (2),
ledit procédé étant **caractérisé en ce que** ledit premier test d'authentification est réalisé au sein du second terminal de communication sans fil (2), et **en ce que** le service est mis à disposition (27) au premier terminal à condition que les données d'accès (17) transmises au premier terminal (1) à partir du second terminal (2) comprennent en outre ladite première autorisation d'accès en tant que résultat du premier test d'authentification.

2. Procédé selon la revendication 1, suivant lequel les données d'accès comprennent une liste de services,

3. Procédé selon la revendication 1 ou 2, suivant lequel les données d'accès comprennent des paramètres de localisation du second terminal, adaptés pour déterminer une offre du service en fonction d'un endroit où se trouve l'utilisateur.

4. Procédé selon l'une quelconque des revendications 1 à 3, suivant lequel une partie au moins des données d'accès (43) est stockée dans un module d'identification d'abonné (4) compris dans le second terminal (2).

5. Procédé selon la revendication 4, suivant lequel des codes de programmation (44) sont en outre stockés dans le module d'identification d'abonné (4), pour commander la transmission d'une partie au moins des données d'accès au premier terminal (1) à partir du second terminal (2).

6. Procédé selon la revendication 5, suivant lequel les codes de programmation sont adaptés pour commander en outre une présentation d'éléments d'information résultant des données d'accès, ladite présentation étant effectuée au moyen du premier terminal (1).

7. Procédé selon l'une quelconque des revendications 1 à 6, suivant lequel ladite liaison de transmission supplémentaire (101) est une liaison de type radio ou infrarouge.

8. Procédé selon l'une quelconque des revendications 1 à 7, comprenant en outre l'étape suivante:
- production, par un serveur de fourniture du service (5) relié au réseau de communication (100), d'une seconde autorisation d'accès audit service résultant d'une comparaison entre les données d'identification et une liste de données d'identification d'utilisateurs pour lesquels l'accès est autorisé, ou résultant de la présence du service dans une liste de services autorisés établie pour lesdites données d'identification.

9. Procédé selon l'une quelconque des revendications 1 à 8, suivant lequel les données d'accès transmises comprennent des paramètres d'authentification de l'utilisateur du second terminal (2).

10. Procédé selon la revendication 9, comprenant en outre l'étape suivante :
- production, par un serveur de fourniture du service (5) relié au réseau de communication (100), d'une seconde autorisation d'accès audit service résultant d'un second test d'authentification de l'utilisateur exécuté par le serveur de fourniture du service.

11. Terminal de communication sans fil (2) par un réseau de communication (100), comprenant:
- des moyens de communication par une liaison de transmission supplémentaire (101) distincte dudit réseau de communication,
- des moyens de réalisation d'un test d'authentification d'un utilisateur, et
- des moyens de transmission d'une partie au moins de données d'accès par ladite liaison de transmission supplémentaire, ladite partie des données d'accès comprenant des paramètres d'identification d'un abonné au réseau de communication associé au terminal (2),
ledit terminal de communication sans fil étant **caractérisé en ce que** les moyens de transmission par ladite liaison de transmission supplémentaire sont adaptés pour transmettre en outre une autorisation ou un refus d'accès en tant que résultat du test d'authentification.

12. Terminal de communication sans fil (2) selon la revendication 11 comprenant en outre des moyens de lecture de données d'accès dans un module d'identification d'abonné (4) compris dans ledit terminal de communication sans fil (2), et suivant lequel les moyens de lecture, les moyens de communication, les moyens de réalisation et les moyens de transmission sont agencés pour être commandés lors d'une exécution d'un programme stocké dans le module d'identification d'abonné.

13. Terminal de communication sans fil (2) selon la revendication 11 ou 12 suivant lequel ladite partie des données d'accès transmises comprend des paramètres d'authentification de l'utilisateur du second terminal (2).

14. Terminal de communication (1) comprenant des moyens de connexion à un réseau de communication (100) et des moyens de communication par une liaison de transmission supplémentaire (101) distincte dudit réseau de communication, ledit terminal comprenant en outre des moyens de mise à disposition d'un service délivré par l'intermédiaire du réseau de communication, agencés pour délivrer le service à partir de données d'accès reçues par ladite liaison de transmission supplémentaire et comprenant des paramètres d'identification d'un abonné au réseau de communication associé à un second terminal (2) selon la revendication 11,
ledit terminal étant **caractérisé en ce qu'**il est agencé pour délivrer le service à condition que les données d'accès reçues par ladite liaison de transmission supplémentaire contiennent en outre une autorisation d'accès.

15. Terminal de communication selon la revendication 14, dans lequel ladite liaison de transmission supplémentaire (101) est une liaison de type radio ou infrarouge.

16. Terminal de communication selon la revendication 14 ou 15 suivant lequel les données d'accès reçues comprennent des paramètres d'authentification de l'utilisateur du second terminal (2).

17. Module d'identification d'abonné (4) pour équipement de communication sans fil (3) par un réseau de communication (100) comprenant un support d'enregistrement dans lequel sont stockées des données d'accès et des codes de programmation, les codes de programmation étant adaptés pour commander une transmission d'une partie au moins des données d'accès par ledit équipement de communication sans fil au moyen d'une liaison de transmission supplémentaire (101), distincte du réseau de communication (100) dudit équipement de communication sans fil, ladite partie des données d'accès comprenant des paramètres d'identification d'un abonné au réseau de communication associé à un terminal (2) selon la revendication 11 incorporant l'équipement de communication sans fil (3) et le module (4), et des paramètres d'authentification d'un utilisateur du terminal (2),
ledit module d'identification d'abonné étant **caractérisé en ce que** les codes de programmation sont adaptés pour commander en outre une transmission d'une autorisation d'accès par ledit équipement de communication sans fil au moyen de ladite liaison de transmission supplémentaire.

18. Module d'identification d'abonné selon la revendication 17, dans lequel les codes de programmation sont adaptés pour commander en outre une présentation d'éléments d'information résultant des données d'accès transmises, ladite présentation étant effectuée au moyen d'un autre terminal (I) relié à l'équipement de communication sans fil (2) par ladite liaison de transmission supplémentaire (101).

## Patentansprüche

1. Verfahren zum Zugriff auf einen Dienst durch einen Benutzer über ein erstes Kommunikationsendgerät (1), das an ein Kommunikationsnetz (100) angeschlossen ist, wobei das erste Endgerät überdies an ein zweites drahtloses Kommunikationsendgerät (2) über eine zusätzliche Übertragungsleitung (101), die vom Kommunikationsnetz getrennt ist, angeschlossen ist, wobei das Verfahren die folgenden Schritte umfasst:
- Erstellung einer Kommunikationssitzung (12, 13) zwischen dem ersten (1) und dem zweiten (2) Endgerät über die zusätzliche Übertragungsleitung (101);
- Durchführung eines ersten Authentifizierungstests des Benutzers, der zu einer ersten Zugangsgenehmigung zu dem Dienst oder einer Zugangsverweigerung als Resultat des ersten Authentifizierungstests führt;
- Übertragung von Zugangsdaten (17) an das erste Endgerät (1) vom zweiten Endgerät (2) über die zusätzliche Übertragungsleitung; und
- Bereitstellung des Dienstes (27) für das erste Endgerät (1) über das Kommunikationsnetz (100), falls die übertragenen Zugangsdaten Identifikationsparameter eines Teilnehmers am Kommunikationsnetz, das mit dem zweiten Endgerät (2) verbunden ist, umfassen,
wobei das Verfahren **dadurch gekennzeichnet ist, dass** der erste Authentifizierungstest innerhalb des zweiten drahtlosen Kommunikationsendgeräts (2) durchgeführt wird, und dass der Dienst dem ersten Endgerät zur Verfügung gestellt wird (27), falls die von dem zweiten Endgerät (2) an das erste Endgerät (1) übertragenen Zugangsdaten (17) ferner die erste Zugangsgenehmigung als Resultat des ersten Authentifizierungstests umfassen.

2. Verfahren nach Anspruch 1, bei dem die Zugangsdaten eine Dienstliste umfassen.

3. Verfahren nach Anspruch 1 oder 2, bei dem die Zugangsdaten Lokalisierungsparameter des zweiten Endgeräts umfassen, die geeignet sind, ein Dienstangebot in Abhängigkeit von einer Stelle, an der sich der Benutzer befindet, zu bestimmen.

4. Verfahren nach einem der Ansprüche 1 bis 3, bei dem mindestens ein Teil der Zugangsdaten (43) in einem Teilnehmeridentifikationsmodul (4), das in dem zweiten Endgerät (2) enthalten ist, gespeichert ist.

5. Verfahren nach Anspruch 4, bei dem die Programmierungscodes (44) ferner in dem Teilnehmeridentifikationsmodul (4) gespeichert sind, um die Übertragung mindestens eines Teils der Zugangsdaten zum ersten Endgerät (1) vom zweiten Endgerät (2) zu steuern.

6. Verfahren nach Anspruch 5, bei dem die Programmierungscodes geeignet sind, ferner eine Präsentation von Informationselementen, die sich aus den Zugangsdaten ergeben, zu steuern, wobei diese Präsentation mit Hilfe des ersten Endgeräts (1) durchgeführt wird.

7. Verfahren nach einem der Ansprüche 1 bis 6, bei dem die zusätzliche Übertragungsleitung (101) eine Verbindung vom Typ Funk- oder Infrarotverbindung ist.

8. Verfahren nach einem der Ansprüche 1 bis 7, ferner umfassend den folgenden Schritt:
- über einen Dienstleistungsserver (5), der mit dem Kommunikationsnetz (100) verbunden ist, Lieferung einer zweiten Zugangsgenehmigung zu dem Dienst, die sich aus einem Vergleich zwischen den Identifikationsdaten und einer Liste von Identifikationsdaten von Benutzern, für die der Zugang genehmigt ist, ergibt, oder die sich aus dem Vorhandensein des Dienstes in einer Liste von genehmigten Diensten ergibt, die für die Identifikationsdaten erstellt wurde.

9. Verfahren nach einem der Ansprüche 1 bis 8, bei dem die übertragenen Zugangsdaten Authentifizierungsparameter des Benutzers des zweiten Endgeräts (2) umfassen.

10. Verfahren nach Anspruch 9, ferner umfassend den folgenden Schritt:
- über einen Dienstleistungsserver (5), der mit dem Kommunikationsnetz (100) verbunden ist, Lieferung einer zweiten Zugangsgenehmigung zu dem Dienst, die sich aus einem zweiten Authentifizierungstest des Benutzers ergibt, der vom Dienstleistungsserver durchgeführt wird.

11. Drahtloses Kommunikationsendgerät (2) über ein Kommunikationsnetz (100), umfassend:
- Kommunikationsmittel über eine zusätzliche Übertragungsleitung (101), die vom Kommunikationsnetz getrennt ist,
- Mittel zur Durchführung eines Authentifizierungstests eines Benutzers und
- Mittel zur Übertragung mindestens eines Teils der Zugangsdaten über die zusätzliche Übertragungsleitung, wobei dieser Teil der Zugangsdaten Identifikationsparameter eines Teilnehmers am mit dem Endgerät (2) verbundenen Kommunikationsnetz umfasst,
wobei das Kommunikationsendgerät **dadurch gekennzeichnet ist, dass** die Übertragungsmittel über die zusätzliche Übertragungsleitung dazu geeignet sind, ferner eine Genehmigung oder eine Verweigerung des Zugangs als Resultat des Authentifizierungstests zu übertragen.

12. Drahtloses Kommunikationsendgerät (2) nach Anspruch 11, ferner umfassend Lesemittel für die Zugangsdaten in einem Teilnehmeridentifikationsmodul (4), das in dem drahtlosen Kommunikationsendgerät (2) enthalten ist, und bei dem die Lesemittel, die Kommunikationsmittel, die Durchführungsmittel und die Übertragungsmittel derart vorgesehen sind, dass sie bei einer Ausführung eines in dem Teilnehmeridentifikationsmodul gespeicherten Programms gesteuert werden.

13. Drahtloses Kommunikationsendgerät (2) nach Anspruch 11 oder 12, bei dem dieser Teil der übertragenen Zugangsdaten Authentifikationsparameter des Benutzers des zweiten Engeräts (2) umfasst.

14. Kommunikationsendgerät (1), umfassend Anschlussmittel an ein Kommunikationsnetz (100) und Kommunikationsmittel über eine zusätzliche Übertragungsleitung (101), die von dem Kommunikationsnetz getrennt ist, wobei das Endgerät ferner Mittel zur Bereitstellung eines Dienstes, der über das Kommunikationsnetz geliefert wird, umfasst, die derart vorgesehen sind, dass sie den Dienst auf Basis von Zugangsdaten liefern, die von der zusätzlichen Übertragungsleitung erhalten werden, und umfassend Identifikationsparameter eines Teilnehmers am Kommunikationsnetz, das mit einem zweiten Endgerät (2) nach Anspruch 11 verbunden ist,
wobei das Endgerät **dadurch gekennzeichnet ist, dass** es derart vorgesehen ist, dass es den Dienst liefert, falls die von der zusätzlichen Übertragungsleitung erhaltenen Zugangsdaten ferner eine Zugangsgenehmigung enthalten.

15. Kommunikationsendgerät nach Anspruch 14, bei dem die zusätzliche Übertragungsleitung (101) eine Verbindung des Typs Funk- oder Infrarotverbindung ist.

16. Kommunikationsendgerät nach Anspruch 14 oder 15, bei dem die erhaltenen Zugangsdaten Authentifikationsparameter des Benutzers des zweiten Endgeräts (2) umfassen.

17. Teilnehmeridentifikationsmodul (4) für eine drahtlose Kommunikationseinrichtung (3) über ein Kommunikationsnetz (100), umfassend einen Aufzeichnungsträger, in dem Zugangsdaten und Programmierungscodes gespeichert sind, wobei die Programmierungscodes dazu geeignet sind, eine Übertragung mindestens eines Teils der Zugangsdaten durch die drahtlose Kommunikationseinrichtung mit Hilfe einer zusätzlichen Übertragungsleitung (101) der drahtlosen Kommunikationseinrichtung, die vom Kommunikationsnetz (100) getrennt ist, zu steuern, wobei dieser Teil der Zugangsdaten Identifikationsparameter eines Teilnehmers an dem Kommunikationsnetz, das mit einem Endgerät (2) nach Anspruch 11 verbunden ist, umfassend die drahtlose Kommunikationseinrichtung (3) und das Modul (4), und Authentifizierungsparameter eines Benutzers des Endgeräts (2) umfasst,
wobei das Teilnehmeridentifikationsmodul **dadurch gekennzeichnet ist, dass** die Programmierungscodes dazu geeignet sind, des Weiteren eine Übertragung einer Zugangsgenehmigung durch die drahtlose Kommunikationseinrichtung mit Hilfe der zusätzlichen Übertragungsleitung zu steuern.

18. Teilnehmeridentifikationsmodul nach Anspruch 17, bei dem die Programmierungscodes dazu geeignet sind, ferner eine Präsentation von Informationselementen, die sich aus den übertragenen Zugangsdaten ergeben, zu steuern, wobei die Präsentation mit Hilfe eines weiteren Endgeräts (1) durchgeführt wird, das an die drahtlose Kommunikationseinrichtung (2) über die zusätzliche Übertragungsleitung (101) angeschlossen ist.

## Claims

1. Method for accessing a service by a user, via a first communication terminal (1) linked to a communication network (100), said first terminal also being linked to a second wireless communication terminal (2) by an additional transmission link (101) distinct from said communication network, said method comprising the following steps:
- setting up a communication session (12, 13) between the first (1) and second (2) terminals via said additional transmission link (101);
- carrying out a first user authentication test producing a first authorization to access the service or a denial of access as the result of said first authentication test;
- transmitting access data (17) to the first terminal (1) from the second terminal (2) via said additional transmission link; and
- providing the service (27) to the first terminal (1) via said communication network (100) on condition that the access data transmitted comprise parameters identifying a subscriber to the communication network associated with the second terminal (2),
said method being **characterized in that** said first authentication test is carried out within the second wireless communication terminal (2), and **in that** the service is provided (27) to the first terminal on condition that the access data (17) transmitted to the first terminal (1) from the second terminal (2) also comprise said first access authorization as the result of the first authentication test.

2. Method according to Claim 1, according to which the access data comprise a list of services.

3. Method according to Claim 1 or 2, according to which the access data comprise location parameters of the second terminal, adapted to determine a service offering according to a place where the user is located.

4. Method according to any one of Claims 1 to 3, according to which at least a part of the access data (43) is stored in a subscriber identification module (4) included in the second terminal (2).

5. Method according to Claim 4, according to which programming codes (44) are also stored in the subscriber identification module (4), to control the transmission of at least a part of the access data to the first terminal (1) from the second terminal (2).

6. Method according to Claim 5, according to which the programming codes are adapted to also control a presentation of information elements resulting from the access data, said presentation being made by means of the first terminal (1).

7. Method according to any one of Claims 1 to 6, according to which said additional transmission link (101) is a link of radio or infrared type.

8. Method according to any one of Claims 1 to 7, also comprising the following step:
- production, by a server supplying the service (5) linked to the communication network (100), of a second authorization to access said service resulting from a comparison between the identification data and a list of user identification data for which the access is authorized, or resulting from the presence of the service in a list of authorized services created for said identification data.

9. Method according to any one of Claims 1 to 8, according to which the transmitted access data comprise the parameters authenticating the user of the second terminal (2).

10. Method according to Claim 9, also comprising the following step:
- production, by a server supplying the service (5) linked to the communication network (100), of a second authorization to access said service resulting from a second user authentication test executed by the server supplying the service.

11. Wireless communication terminal (2) for wireless communication via a communication network (100), comprising:
- means for communication via an additional transmission link (101) distinct from said communication network,
- means for carrying out a user authentication test, and
- means for transmitting at least a part of the access data via said additional transmission link, said part of the access data comprising parameters identifying a subscriber to the communication network associated with the terminal (2),
said wireless communication terminal being **characterized in that** the means for transmission via said additional transmission link are adapted to also transmit an access authorization or a denial of access as the result of the authentication test.

12. Wireless communication terminal (2) according to Claim 11, also comprising means for reading access data in 2 subscriber identification module (4) included in said wireless communication terminal (2), and according to which the means for reading, the means for communication, the means for carrying out and the means for transmission are arranged to be controlled during an execution of a program stored in the subscriber identification module.

13. Wireless communication terminal (2) according to Claim 11 or 12, according to which said part of the transmitted access data comprises parameters authenticating the user of the second terminal (2).

14. Communication terminal (1) comprising means for connecting to a communication network (100) and means for communication via an additional transmission link (101) distinct from said communication network, said terminal also comprising means for providing a service delivered via the communication network, arranged to deliver the service on the basis of access data received via said additional transmission link and comprising parameters identifying a subscriber to the communication network associated with a second terminal (2) according to Claim 11,
said terminal being **characterized in that** it is arranged to deliver the service on condition that the access data received via said additional transmission link also contain an access authorization.

15. Communication terminal according to Claim 14, in which said additional transmission link (101) is a link of radio or infrared type.

16. Communication terminal according to Claim 14 or 15, according to which the received access data comprise parameters authenticating the user of the second terminal (2).

17. Subscriber identification module (4) for wireless communication equipment (3) for wireless communication via a communication network (100), comprising a storage medium in which are stored access data and programming codes, the programming codes being adapted to control transmission of at least a part of the access data by said wireless communication equipment by means of an additional transmission link (101) distinct from the communication network (100) of said wireless communication equipment, said part of the access data comprising parameters identifying a subscriber to the communication network associated with a terminal (2) according to Claim 11 incorporating the wireless communication equipment (3) and the module (4), and parameters authenticating a user of the terminal (2), said subscriber identification module being **characterized in that** the programming codes are adapted to also control a transmission of an access authorization by said wireless communication equipment by means of said additional transmission link.

18. Subscriber identification module according to Claim 17, in which the programming codes are adapted to also control a presentation of information elements resulting from the access data transmitted, said presentation being made by means of another terminal (1) linked to the wireless communication equipment (2) by said additional transmission link (101).
